# DEMANDE DE BREVET EUROPEEN

(11) **EP 4 620 741 A1**
(43) Date de publication de la demande: **24.09.2025**
(21) Numéro de dépôt: 25164160.1
(22) Date de dépôt: 17.03.2025
(51) Int. Cl.: B60R 16/02

(54) **AGENCEMENT POUR MOTEUR DE VEHICULE COMPRENANT UN BOITIER ET UN DISPOSITIF DE FIXATION DE CABLES DE RACCORDEMENT ELECTRIQUE**

(30) Priorité: 18.03.2024 FR 2402653
(71) Demandeur: Flexis, 92100 Boulogne Billancourt (FR)
(72) Inventeur: ALLARD, Benoit, 78640 VILLIERS SAINT-FREDERIC (FR); JAMES, Nicolas, 78084 GUYANCOURT (FR); PAROLINI, Pascal, 78084 GUYANCOURT (FR)
(74) Mandataire: Lavoix

(57) **Abrégé**

Agencement (3) pour un moteur (2) de véhicule (1) automobile, comprenant un boîtier (4) et un dispositif de fixation (5) d'au moins un câble (6) comprenant une embase (7) délimitant au moins un emplacement (71) configuré pour recevoir l'au moins un câble (6), l'embase (7) et le boîtier (4) étant venus de matière et une bride de fixation (8) amovible et rapportée, configurée pour coopérer avec le boîtier (4) et/ou l'embase (7) de sorte à maintenir un câble (6) dans l'au moins un emplacement (71).

## Description

L'invention concerne un agencement pour moteur de véhicule automobile comprenant un boîtier pour moteur et un dispositif de fixation de câbles, notamment de câbles de raccordement électrique. L'invention concerne également un véhicule comprenant un tel agencement. L'invention concerne enfin un procédé de fixation de câbles dans un agencement selon l'invention.

Dans le milieu automobile, il est connu d'assurer la fixation de faisceaux de câbles haute tension sur le boîtier, ou carter, du moteur électrique du véhicule. Classiquement, une telle fixation est réalisée par l'intermédiaire d'une patte amovible rapportée, notamment métallique, fixée sur une partie supérieure du boîtier par vissage et d'une bride coopérant avec ladite patte de sorte à maintenir lesdits câbles entre la patte amovible et la bride. Une telle fixation génère néanmoins un encombrement vertical non négligeable.

L'invention s'inscrit dans ce contexte et vise à fournir une alternative aux fixations de câbles connues qui soit moins encombrante. Additionnellement, l'invention vise à simplifier la fixation des câbles lors de l'assemblage du véhicule.

L'invention concerne ainsi un agencement pour un moteur de véhicule automobile, comprenant un boîtier pour ledit moteur et un dispositif de fixation d'au moins un câble, notamment un câble de raccordement électrique, le dispositif de fixation comprenant :
- une embase délimitant au moins un emplacement configuré pour recevoir l'au moins un câble, l'embase et le boîtier étant venus de matière ;
- une bride de fixation amovible et rapportée, configurée pour coopérer avec le boîtier et/ou l'embase de sorte à maintenir un câble dans l'au moins un emplacement.

Notamment :
- le boîtier et l'embase sont réalisés dans un matériau métallique ; et/ou
- la bride de fixation est réalisée dans un matériau métallique.

Optionnellement, l'agencement comprend, en outre une coque intermédiaire, notamment réalisée dans un matériau plastique, configurée pour être interposée entre au moins une partie de la bride de fixation et l'au moins un câble.

Notamment la coque intermédiaire comprend une rainure complémentaire de forme de la bride de fixation et configurée pour recevoir la bride de fixation.

De manière optionnelle, l'agencement comprend, en outre, un moyen de retenue d'un câble.

Optionnellement encore, l'agencement comprend, en outre, un organe de butée, configuré pour être interposé entre l'embase et la bride de fixation de sorte à limiter un écrasement de l'au moins un câble.

De manière optionnelle, l'agencement comprend, en outre, un organe d'amortissement configuré pour être interposé entre l'embase et la bride de fixation de sorte à limiter des vibrations.

Selon des exemples de réalisation :
- la bride de fixation est fixée sur l'embase et/ou le boîtier par l'intermédiaire d'un moyen de fixation rapporté, tel qu'une vis ou un moyen de clipage ; et/ou
- la bride de fixation est fixée sur l'embase et/ou le boîtier par l'intermédiaire d'une liaison pivotante.

L'invention porte également sur un véhicule automobile comprenant au moins un câble, notamment de raccordement électrique, et un agencement selon l'invention, l'au moins un câble étant disposé dans l'au moins un emplacement de sorte à être interposé entre une partie de l'embase et de la bride.

L'invention s'étend enfin à un procédé de fixation d'au moins un câble dans un véhicule selon l'invention, comprenant le positionnement de l'au moins un câble dans l'au moins un emplacement, le positionnement puis la fixation de la bride de fixation sur le boîtier et/ou l'embase de sorte que l'au moins un câble est interposé entre l'embase et la bride de fixation.

D'autres détails, caractéristiques et avantages ressortiront plus clairement à la lecture de la description détaillée donnée ci-après, à titre indicatif et non limitatif, en relation avec les différents exemples de réalisation illustrés sur la figure suivante :
La figure 1 est une représentation schématique d'un exemple de réalisation d'un véhicule équipé d'un agencement comprenant boîtier de moteur et un dispositif de fixation de câbles.

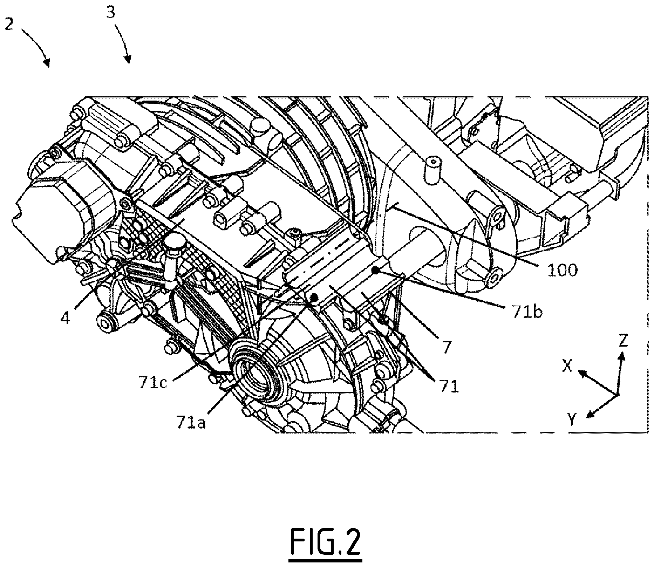

La figure 2 est une représentation schématique de l'agencement et d'une embase du dispositif de fixation.

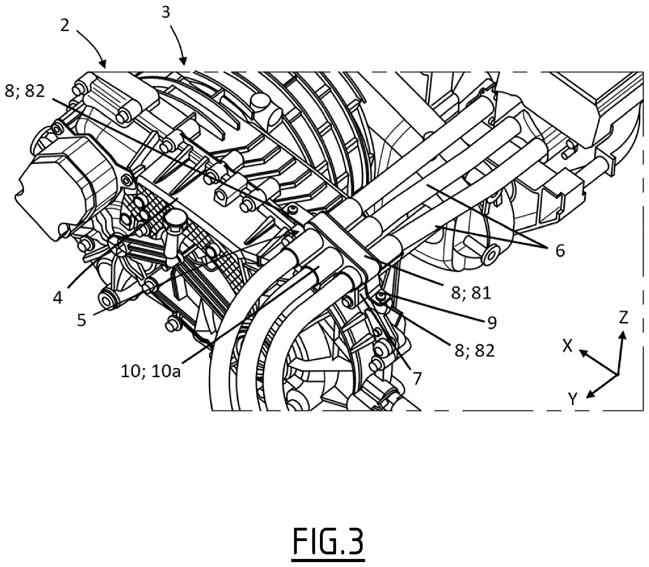

La figure 3 est une représentation schématique de l'agencement et du dispositif de fixation assemblé.
La figure 4 est une représentation schématique de l'agencement et d'une vue éclatée du dispositif de fixation.
La figure 5 est une représentation schématique en coupe de l'agencement et du dispositif de fixation assemblé.

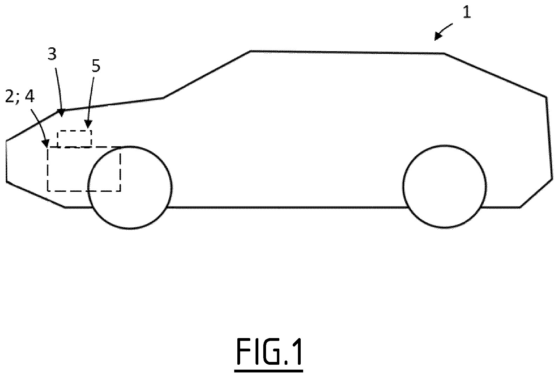

La figure 1 illustre schématiquement un exemple de réalisation d'un véhicule 1, notamment un véhicule automobile. Le véhicule 1 considéré est à motorisation électrique ou hybride et comprend au moins un moteur 2 électrique, aussi qualifié de machine électrique. Par exemple, le véhicule 1 peut être un véhicule particulier ou un véhicule utilitaire.

Selon les conventions relatives au domaine automobile, dans l'ensemble de la description ci-après la direction dans laquelle le véhicule 1 automobile se déplace en ligne droite est définie comme étant la direction longitudinale X, orientée depuis l'avant vers l'arrière. La direction perpendiculaire à la direction longitudinale X et située dans un plan parallèle à un sol sur lequel repose le véhicule 1 est nommée direction transversale Y. La direction perpendiculaire aux directions X et Y est nommée direction verticale Z. Ainsi, on définit un repère direct XYZ. Les termes « supérieur » et « inférieur » s'entendent dans leur sens général, le terme « inférieur » désignant une proximité avec le sol plus importante. Également, les termes « premier », « deuxième » et « troisième » ont vocation à distinguer des éléments similaires et non à définir une hiérarchie au sein desdits éléments.

Le véhicule 1 comprend un agencement 3 pour moteur 2 de véhicule 1 automobile, notamment un moteur 2 électrique, comprenant, de manière générale, un boîtier 4 et un dispositif de fixation 5 d'au moins un câble 6. Notamment, l'au moins un câble 6 est un câble 6 de raccordement électrique, par exemple haute tension, configurés pour alimenter le moteur 2 en énergie électrique. De manière classique, non détaillée, l'au moins un câble 6 est entouré d'une gaine. Également, on qualifie de « boîtier » une enveloppe extérieure du moteur 2. Par exemple, le boîtier 4 est réalisé dans un matériau métallique, tel que de l'acier et/ou de l'aluminium. Notamment, le boîtier 4 comprend une pluralité de parois.

De manière générale, le dispositif de fixation 5 comprend une embase 7 et une bride de fixation 8 amovible et rapportée relativement à l'embase 7.

L'embase 7 et le boîtier 4 sont avantageusement venus de matière, c'est-à-dire qu'ils forment un ensemble monobloc et ne peuvent être dissociés l'un de l'autre sans résulter en la dégradation, voire destruction, des pièces. Aussi, l'embase 7 est réalisée dans un matériau métallique, tel que de l'acier et/ou de l'aluminium. Notamment l'embase 7 est agencée dans l'une des parois, par exemple une paroi supérieure, du boîtier 4. Un tel principe permet avantageusement la réduction de l'encombrement généré pour la fixation de l'au moins un câble 6, notamment le long de la direction verticale Z.

L'embase 7 délimite au moins un emplacement 71 configuré pour recevoir un câble 6, notamment l'un des câbles 6 de raccordement électrique. L'au moins un emplacement 71 s'étend le long d'une direction d'extension 100, ici, de manière non limitative, parallèle à la direction transversale Y. Notamment, l'embase 7 comprend une pluralité d'emplacements 71. En l'espèce, l'embase 7 comprend trois emplacements 71 configurés pour recevoir chacun un câble 6, notamment un câble 6 d'un faisceau de câbles 6. Il est néanmoins entendu que l'invention s'étend à un dispositif de fixation 5, et à une embase 7, comprenant un nombre supérieur ou inférieur d'emplacements 71. La description ci-après est faite en référence à l'un des emplacements 71 et peut s'appliquer à tout ou partie de la pluralité d'emplacements 71.

L'emplacement 71 présente un profil complémentaire de forme de l'au moins un câble 6. Notamment, l'emplacement 71 présente un profil courbé, par exemple semi-circulaire ou en arc de cercle. La forme courbée de l'emplacement 71 est formée par un fond 71a de l'emplacement 71. L'embase 7 comprend également une première surface 71b, délimitant une portion supérieure de l'embase 7 et à laquelle est relié le fond 71a de l'emplacement 71. Par exemple la première surface 71b est plane ou sensiblement plane.

Lorsque l'embase 7 comprend une pluralité d'emplacements 71, ceux-ci sont, notamment séparés par un espacement 71c, permettant notamment de limiter le contact entre différents câbles 6 adjacents. Notamment, les espacements 71c séparant les différents emplacements 71 s'inscrivent dans la première surface 71b.

La bride de fixation 8 est une pièce amovible et rapportée, configurée pour coopérer avec le boîtier 4 et/ou l'embase 7 de sorte à maintenir un câble 6 dans l'au moins un emplacement 71. Notamment, la bride de fixation 8 est réalisée dans un matériau métallique, par exemple en aluminium et/ou en acier, et est, par exemple, obtenue par moulage ou pliage.

La bride de fixation 8 comprend un corps 81 et au moins une patte 82 reliée au corps 81. Selon un exemple de réalisation, non limitatif, le corps 81 s'inscrit au moins en partie dans une forme rectiligne et/ou dans une forme en « U » ou sensiblement en « U ». Le corps 71 est configuré pour s'étendre transversalement à l'au moins un câble 6 et à la direction d'extension 100 lorsque l'agencement 3 est assemblé. De manière optionnelle mais préférentielle, l'au moins une patte 82 est plane ou sensiblement plane et configurée pour s'étendre au contact de l'embase 7 et/ou du boîtier 4.

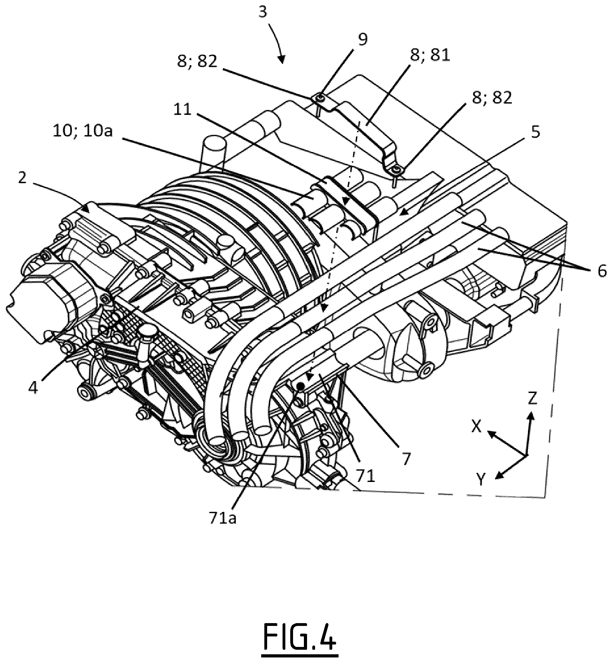

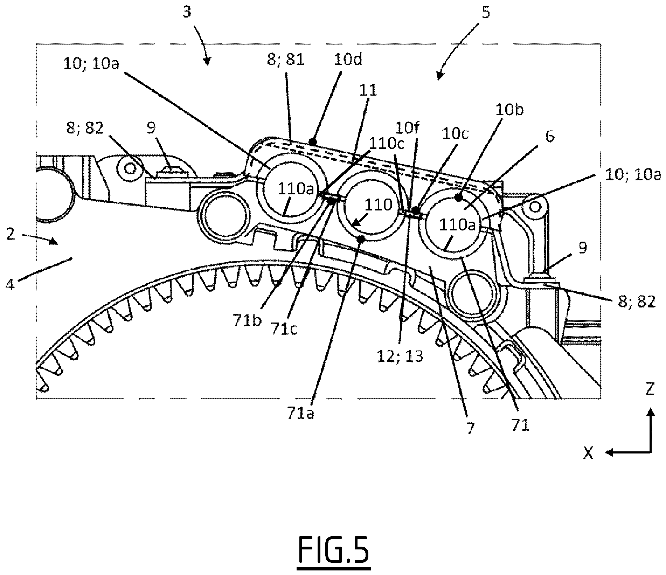

Selon un exemple de réalisation, illustré à la figure 4 ou 5, la bride de fixation 8 est configurée pour être fixée sur l'embase 7 et/ou le boîtier 4 par l'intermédiaire d'un moyen de fixation 9 rapporté, tel qu'une vis ou un moyen de clipage. Dans un tel exemple de réalisation, la bride de fixation 8 comprend deux pattes 82, lesdites pattes 82 étant disposées de part et d'autre du corps 81au niveau d'extrémités opposées du corps. Chacune desdites pattes 82 comprend ainsi un orifice apte à recevoir un moyen de fixation 9.

Selon un mode de réalisation alternatif, non représenté, la bride de fixation 8 est fixée sur l'embase 7 et/ou le boîtier 4 par l'intermédiaire d'une liaison pivotante. Une première extrémité du corps 81de la bride de fixation 8 comprend alors la liaison pivotante tandis qu'une deuxième extrémité, opposée à la première extrémité, comprend une patte 82 telle que décrite plus haut.

Ainsi, lorsque la bride de fixation 8 est montée et fixée sur le boîtier 4 et/ou l'embase 7, l'au moins un câble 6 s'étend dans l'au moins un emplacement 71 et est interposé entre l'embase 7 et la bride de fixation 8 le long d'au moins une direction, notamment ici le long de la direction verticale Z au sein du véhicule 1, orthogonale à la direction d'extension 100.

De manière optionnelle, l'agencement 3 selon l'invention comprend, en outre, une coque intermédiaire 10, configurée pour être interposée entre au moins une partie de la bride de fixation 8 et l'au moins un câble 6. En l'espèce, la coque intermédiaire 10 s'étend entre le corps 81 de la bride de fixation 8 et l'embase 7.

Notamment, la coque intermédiaire 10 est réalisée dans un matériau plastique, optionnellement un matériau plastique chargé, par exemple avec des fibres de verre.

La coque intermédiaire 10 délimite au moins un logement 10a complémentaire de forme de l'au moins un câble 6. L'au moins un logement 10a est configuré pour s'étendre en regard de l'au moins un emplacement 71 de l'embase 7 lorsque la coque intermédiaire 10 est disposée dans l'agencement 3. Particulièrement, la coque intermédiaire 10 comprend autant de logements 10a que l'embase 7 comprend d'emplacements 71 configurés pour recevoir un câble 6. Ainsi, lorsque la coque intermédiaire comprend une pluralité de logements 10a, chacun est configuré pour s'étendre en regard d'un emplacement 71 de l'embase 7, notamment de sorte à coopérer avec un câble 6. Dans l'exemple illustré, la coque intermédiaire 10 comprend, de manière non limitative, trois logements 10a. La description ci-après est faite en référence à un logement 10a, elle s'applique néanmoins, *mutatis mutandis* aux différents logements 10a.

Similairement aux emplacements 71, l'au moins un logement 10a présente un profil complémentaire de forme de l'au moins un câble 6. Notamment, l'au moins un logement 10a présente un profil courbé, par exemple semi-circulaire ou en arc de cercle. La forme courbée de l'emplacement 71 est formée par une surface interne 10b de l'au moins un logement 10a.

La coque intermédiaire 10 comprend également une surface intermédiaire c, configurée pour être tournée vers l'embase 7 lorsque l'agencement 3 est assemblé et, notamment pour être disposée au niveau de la première surface 71b, par exemple au contact de la première surface 71b de l'embase 7. Optionnellement, la surface intermédiaire 10c est plane ou sensiblement plane. Notamment, les différents logements 10a sont séparés par un écartement 10f défini, notamment similaire à l'espacement 71c séparant les logements 10a, et s'inscrivant en partie dans la surface intermédiaire c.

Selon un exemple de réalisation, la coque intermédiaire 10 est rapportée et amovible relativement à l'embase 7 et à la bride de fixation 8. Par exemple, de manière optionnelle mais préférentielle, la coque intermédiaire 10 comprend une rainure 11 complémentaire de forme de la bride de fixation 8 et configurée pour recevoir ladite bride de fixation 8. La rainure est disposée au niveau d'une surface externe 10d de la coque intermédiaire 10, opposée à la surface intermédiaire 10c. Notamment une première face de la bride de fixation 8, plane ou sensiblement plane et configurée pour être tournée vers l'embase 7, est disposée au contact avec un fond de la rainure 11.

De la sorte, des bords de la rainure 11 limitent les déplacements de la bride de fixation 8 relativement à la coque intermédiaire 10. Notamment, une profondeur de ladite rainure 11 est égale, ou sensiblement égale, à une épaisseur de la bride de fixation 8 de sorte que l'encombrement, notamment ici l'encombrement vertical Z, généré par la coopération entre la bride de fixation 8 et la coque intermédiaire 10 est limité, voire nul. Par exemple, une deuxième face de la bride de fixation 8, opposée à la première face, est affleurante, ou sensiblement affleurante avec la surface externe 10d de la coque intermédiaire 10.

Selon une alternative de réalisation, la coque intermédiaire 10 est solidaire de la bride de fixation 8 et rapportée relativement à l'embase 7, la coque intermédiaire 10 étant surmoulée sur ladite bride. La coque intermédiaire 10 peut alors comprendre une rainure 11 tel que décrit précédemment.

Selon encore une alternative de réalisation dans lequel l'agencement 2 est dépourvue de la coque intermédiaire 10, le corps 81 de la bride de fixation 8 comprend l'au moins un logement 10a tel que décrit précédemment, la description précédente s'appliquant *mutatis mutandis à* la bride de fixation 8, notamment à la première face de la bride de fixation 8.

De manière optionnelle, l'agencement 3 selon l'invention comprend, en outre, une coque intermédiaire complémentaire 110, configurée pour être interposée entre l'embase 7 et l'au moins un câble 6. La coque intermédiaire complémentaire 110 est interposée entre la coque intermédiaire 10 et l'embase 7. Notamment, la coque intermédiaire complémentaire 110 est pièce mince, réalisée dans un matériau plastique, optionnellement un matériau plastique chargé, par exemple avec des fibres de verre.

La coque intermédiaire complémentaire 110 comporte au moins une zone en creux 110a complémentaire de forme de l'au moins un câble 6. L'au moins une zone en creux 110a est configurée pour être reçue dans l'au moins un emplacement 71 de l'embase 7 lorsque la coque intermédiaire complémentaire 110 est disposée dans l'agencement 3. Particulièrement, la coque intermédiaire complémentaire 110 comprend autant de zones en creux 110a que l'embase 7 comprend d'emplacements 71 configurés pour recevoir un câble 6. Ainsi, lorsque la coque intermédiaire complémentaire 110 comprend une pluralité de zones en creux 110a, chacun est configuré pour être reçu dans un emplacement 71 de l'embase 7, notamment de sorte à coopérer avec un câble 6 et être interposé entre la câble 6 et la surface de l'embase 7. Dans l'exemple illustré, la coque intermédiaire complémentaire 110 comprend, de manière non limitative, trois zones en creux 110a. La description ci-après est faite en référence à une zone en creux 110a, elle s'applique néanmoins, *mutatis mutandis* aux autres zones en creux 110a.

Similairement aux emplacements 71, l'au moins une zone en creux 110a présente un profil complémentaire de forme de l'au moins un câble 6. Notamment, l'au moins une zone en creux 110a présente un profil courbé, par exemple semi-circulaire ou en arc de cercle. La forme courbée de la zone en creux 110a est formée par une surface interne de l'au moins une zone en creux 110a.

La coque intermédiaire complémentaire 110 comprend également une surface intermédiaire 110c, configurée pour être tournée vers la coque intermédiaire 10 lorsque l'agencement 3 est assemblé et, notamment pour être disposée entre la première surface 71b et la surface intermédiaire 10c.

Selon un exemple de réalisation, la coque intermédiaire complémentaire 110 est rapportée et amovible relativement à l'embase 7 et à la coque intermédiaire 10.

La coque intermédiaire 10 et la coque intermédiaire complémentaire 110 constituent ensemble un manchon interposé entre l'embase 7 et la bride de fixation 8. Ce manchon délimite des passages pour chaque câble 6. Il est constitué de deux pièces distinctes, indépendantes l'une de l'autre, placées de part et d'autre des câbles, ce qui facilite la mise en place de l'agencement 3.

L'agencement 3 peut comprendre seulement la coque intermédiaire 10, à la fois la coque intermédiaire 10 et la coque intermédiaire complémentaire 110, seulement la coque intermédiaire complémentaire 110, ou encore peut ne comprendre ni la coque intermédiaire 10 ni la coque intermédiaire complémentaire 110.

De manière optionnelle, l'agencement 3 comprend un moyen de retenue, non représenté, de l'au moins un câble 6 configuré pour limiter le déplacement de l'au moins un câble 6 le long de la direction d'extension 100 de l'au moins un emplacement 71. Par exemple, un tel moyen de retenue comprend un grainage et/ou au moins une nervure disposée au niveau du fond 71a de l'au moins un emplacement 71 de l'embase 7 et/ou sur la première face de la bride de fixation 8. Alternativement, lorsque le dispositif de fixation 5 comprend la coque intermédiaire 10, un tel moyen de retenue est disposée au niveau de l'au moins un emplacement 71 de l'embase 7, notamment sur la surface interne 10b de la coque intermédiaire 10.

De manière optionnelle, l'agencement 3 comprend, en outre, un organe de butée 12 configuré pour être interposé entre l'embase 7 et la bride de fixation 8 de sorte à limiter un écrasement de l'au moins un câble 6. Par exemple, un tel organe comprend un grainage et/ou au moins une nervure formée dans la matière de la première surface 71b de l'embase 7 et/ou de la première face de la bride de fixation 8. Alternativement, lorsque le dispositif de fixation 5 comprend la coque intermédiaire 10, un tel organe de butée 12 est disposée de la première surface 71b de l'embase 7 et/ou sur la surface intermédiaire 10c de la coque intermédiaire 10. Lorsque l'organe de butée 12 est compris dans l'embase 7, il s'étend transversalement à la direction d'extension 100, vers la bride de fixation 8, de sorte à former butée de la bride de fixation 8 ou de la coque intermédiaire 10 et ainsi limiter un écrasement de l'au moins un câble 6 entre l'embase 7 et la bride de fixation 8. Le principe inverse s'applique lorsque l'organe de butée 12 est compris dans la bride de fixation 8 ou la coque intermédiaire 10, l'organe de butée 12 formant alors butée de l'embase 7. De même le dispositif de fixation 5 peut comprendre une pluralité d'organes de butée 12, compris dans l'embase 7, la bride de fixation 8 et/ou la coque intermédiaire 10. Alternativement, l'organe de butée 12 est formé par une pièce rapportée et fixée, par exemple collée, notamment réalisée dans un matériau plastique ou en caoutchouc.

Optionnellement encore, le dispositif de fixation 5 comprend un organe d'amortissement 13 configuré pour être interposé entre l'embase 7 et la bride de fixation 8 de sorte à limiter des vibrations entre celles-ci. Notamment, l'organe d'amortissement 13 est une pièce rapportée et fixée, par exemple collée, réalisée dans un matériau plastique ou en caoutchouc. L'organe d'amortissement 13 et l'organe de butée 12 sont optionnellement, et avantageusement, confondus. La position de l'organe d'amortissement 13 peut alors être similaire aux exemples de positions décrits précédemment en référence à l'organe de butée 12.

L'invention s'étend également à un procédé de fixation d'au moins un câble 6, notamment de raccordement électrique, dans un véhicule 1 et un agencement 3 selon l'invention. Par exemple ledit câble 6 est un câble haute tension. Le procédé comprend, dans un premier temps, le positionnement de l'au moins un câble 6 dans l'au moins un emplacement 71 de l'embase 7. Lorsque l'embase 7 comprend une pluralité d'emplacements 71, des câbles 6 sont disposés dans tout ou partie desdits emplacements 71.

Le procédé comprend, ensuite, le positionnement puis la fixation de la bride de fixation 8 sur le boîtier 4 et/ou l'embase 7 de sorte que l'au moins un câble 6 est interposé entre l'embase 7 et la bride de fixation 8. Alternativement, lorsque le dispositif de fixation 5 comprend la coque intermédiaire 10, le procédé comprend, préalablement au positionnement et à la fixation de la bride de fixation 8, le positionnement de la coque intermédiaire 10 de sorte que celle-ci est interposée entre l'au moins un câble 6 et la bride de fixation 8.

La présente invention propose ainsi un agencement comprenant un boîtier de moteur et un dispositif de fixation d'au moins un câble permettant avantageusement une fixation plus compacte des câbles de raccordement électrique du véhicule, notamment du moteur, induisant en particulier un encombrement vertical plus faible par rapport à l'art antérieur. L'invention permet, en outre, de réduire le nombre de références et d'étapes d'assemblages nécessaires à la fixation des câbles, réduisant de ce fait les coûts mis en œuvre et le temps nécessaire à la fixation des câbles.

La présente invention ne saurait toutefois se limiter aux moyens et modes décrits et illustrés ici et elle s'étend également à tout moyen ou mode équivalents et à toute combinaison techniquement opérante de tels moyens dans la mesure où ils remplissent *in fine* les fonctionnalités décrites et illustrées dans le présent document.

## Revendications

1. Agencement (3) pour un moteur (2) de véhicule (1) automobile, comprenant un boîtier (4) pour ledit moteur (2) et un dispositif de fixation (5) d'au moins un câble (6), notamment un câble (6) de raccordement électrique, le dispositif de fixation (5) comprenant :
- une embase (7) délimitant au moins un emplacement (71) configuré pour recevoir l'au moins un câble (6), l'embase (7) et le boîtier (4) étant venus de matière ;
- une bride de fixation (8) amovible et rapportée, configurée pour coopérer avec le boîtier (4) et/ou l'embase (7) de sorte à maintenir un câble (6) dans l'au moins un emplacement (71).

2. Agencement (3) selon la revendication précédente, dans lequel :
- le boîtier (4) et l'embase (7) sont réalisés dans un matériau métallique ; et/ou
- la bride de fixation (8) est réalisée dans un matériau métallique.

3. Agencement (3) selon l'une des revendications précédentes, comprenant, en outre une coque intermédiaire (10), notamment réalisée dans un matériau plastique, configurée pour être interposée entre au moins une partie de la bride de fixation (8) et l'au moins un câble (6).

4. Agencement (3) selon la revendication précédente, dans lequel dans lequel la coque intermédiaire (10) comprend une rainure (11) complémentaire de forme de la bride de fixation (8) et configurée pour recevoir la bride de fixation (8).

5. Agencement (3) selon l'une des revendications précédentes, comprenant, en outre, un moyen de retenue d'un câble (6).

6. Agencement (3) selon l'une des revendications précédentes, comprenant, en outre, un organe de butée (12), configuré pour être interposé entre l'embase (7) et la bride de fixation (8) de sorte à limiter un écrasement de l'au moins un câble (6).

7. Agencement (3) selon l'une des revendications précédentes, comprenant, en outre, un organe d'amortissement (13), configuré pour être interposé entre l'embase (7) et la bride de fixation (8) de sorte à limiter des vibrations.

8. Agencement (3) selon l'une des revendications précédentes, dans lequel :
- la bride de fixation (8) est fixée sur l'embase (7) et/ou le boîtier (4) par l'intermédiaire d'un moyen de fixation (9) rapporté, tel qu'une vis ou un moyen de clipage ; et/ou
- la bride de fixation (8) est fixée sur l'embase (7) et/ou le boîtier (4) par l'intermédiaire d'une liaison pivotante.

9. Véhicule (1) automobile comprenant au moins un câble (6), notamment de raccordement électrique, et un agencement (3) selon l'une des revendications précédentes, l'au moins un câble (6) étant disposé dans l'au moins un emplacement (71) de sorte à être interposé entre une partie de l'embase (7) et de la bride.

10. Procédé de fixation d'au moins un câble (6) dans un véhicule (1) selon la revendication précédente, comprenant le positionnement de l'au moins un câble (6) dans l'au moins un emplacement (71), le positionnement puis la fixation de la bride de fixation (8) sur le boîtier (4) et/ou l'embase (7) de sorte que l'au moins un câble (6) est interposé entre l'embase (7) et la bride de fixation (8).
